Europäisches Patentamt

European Patent Office

Office européen des brevets

(19)

(11) Numéro de publication: **0 216 705 B1**

(12) **FASCICULE DE BREVET EUROPEEN**

(45) Date de publication de fascicule du brevet:
**18.12.91**

(51) Int. Cl.⁵: **G01N 23/18**, G01N 23/04

(21) Numéro de dépôt: **86402066.4**

(22) Date de dépôt: **19.09.86**

(54) **Système de contrôle au défilé, de pièces cylindriques, par un rayonnement pénétrant.**

(30) Priorité: **23.09.85 FR 8514054**

(43) Date de publication de la demande:
**01.04.87 Bulletin 87/14**

(45) Mention de la délivrance du brevet:
**18.12.91 Bulletin 91/51**

(84) Etats contractants désignés:
**BE DE GB IT NL SE**

(56) Documents cités:
**US-A- 4 415 980**

**PATENT ABSTRACTS OF JAPAN, vol. 8, no. 163 (P-290)[1600], 27 juillet 1984; & JP-A-59 60 345**

**PATENT ABSTRACTS OF JAPAN, vol. 7, no. 228 (P-228)[1373], 8 octobre 1983; & JP-A-58 117 445**

**PROCEEDINGS 1979 CARNAHAN CONFERENCE ON CRIME COUNTERMEASURES, 16-18 mai 1979, pages 117-122, University of Kentucky; R.G. CUMINGS: "A survey of x-ray technology and available systems for parcel inspection"**

(73) Titulaire: **COMMISSARIAT A L'ENERGIE ATOMIQUE Etablissement de Caractère Scientifique Technique et Industriel
31/33, rue de la Fédération
F-75015 Paris(FR)**

(72) Inventeur: **Chalaye, Hervé
3 Passage du Charolais
F-75012 Paris(FR)**
Inventeur: **Pigeon, Michel
14, Avenue du Maréchal Foch
F-91440 Bures sur Yvette(FR)**

(74) Mandataire: **Mongrédien, André et al
c/o BREVATOME 25, rue de Ponthieu
F-75008 Paris(FR)**

## Description

La présente invention concerne un système de contrôle au défilé, de pièces cylindriques, par un rayonnement pénétrant. Ce système est adapté au contrôle de pièces de forme allongée et de grande longueur, par exemple des profilés. La présente invention s'applique notamment au contrôle de tubes par exemple en matière plastique, en particulier utilisables dans l'industrie pétrolière.

On connaît déjà un système de contrôle au défilé, de tubes en matière plastique, par une méthode radioscopique. Ce système comprend deux ensembles disposés à 90° l'un de l'autre et constitués chacun d'une source de rayons X suivie d'un écran fluorescent, un tube à contrôler circulant entre chaque écran et la source de rayons X correspondante. L'image formée sur chacun des écrans est observée par une caméra de télévision et visualisée sur un récepteur de télévision.

Les défauts qui sont éventuellement présents dans les tubes à contrôler sont détectés par des opérateurs qui observent les écrans de ces récepteurs, en continu. Ces opérateurs accomplissent un travail fastidieux qui implique le remplacement fréquent desdits opérateurs et peut conduire à des erreurs d'inattention de la part de ceux-ci.

On pourrait songer à automatiser ce système connu en lui adjoignant des moyens de traitement des images obtenues par les deux caméras. Mais un tel traitement prendrait du temps car il consisterait à numériser la totalité des informations présentes sur un écran et, à partir de ces informations numérisées, à rechercher les zones de plus forte densité par une analyse d'image. Une telle analyse serait compliquée par le fait que la densité d'une image d'une pièce cylindrique exempte de défauts est continuement variable pour une section donnée de cette pièce. Une telle méthode serait donc longue et nécessiterait un ensemble informatique de puissance importante.

La présente invention a pour but de remédier aux inconvénients précédents.

Elle a pour objet un système de contrôle au défilé, d'une pièce cylindrique, par un rayonnement pénétrant, caractérisé en ce qu'il comprend :

- des moyens de déplacement de la pièce selon sa génératrice,
- une source dudit rayonnement, prévue pour envoyer ce rayonnement sur la pièce, transversalement à celle-ci, lors du passage de cette pièce devant la source,
- des moyens de détection, prévus pour détecter le rayonnement ayant traversé la pièce et pour fournir un signal représentatif de chaque tranche de cette pièce, qui passe devant la source, et
- des moyens électroniques de traitement, prévus pour déterminer la différence entre les signaux correspondant à deux tranches successives, de manière à obtenir un signal de mesure représentatif d'éventuels défauts de la pièce.

Il s'agit donc de contrôler des pièces dont la surface externe est cylindrique, c'est-à-dire est une surface engendrée par le déplacement d'une droite appelée "génératrice", assujettie à rester parallèle à une direction fixe et à rencontrer une courbe plane fixe appelée "base", dont le plan coupe la direction donnée.

Selon l'invention, des mesures sont effectuées non pas sur une image mais sur chaque tranche de la pièce à contrôler, tranche qui est comparée, compte tenu du défilement de la pièce devant la source, à la tranche précédente. La différence entre deux mesures consécutives met ainsi en évidence l'évolution locale de la densité de la pièce. Le système de contrôle non destructif selon l'invention est ainsi beaucoup plus simple et plus fiable que les systèmes décrits plus haut. Il est en outre particulièrement sensible aux défauts ponctuels. Dans des tubes en matière plastique, on peut être justement amené à rechercher des bulles dont le diamètre minimal est de l'ordre de 1 à 3 millimètres, ce qui peut donc être aisément fait avec le système de l'invention.

Le déplacement peut être continu ou pas à pas. Il peut être lent, mais l'invention est plus particulièrement adaptée au contrôle de pièces en défilement rapide.

Selon un mode de réalisation préféré du système objet de l'invention, les moyens de détection comprennent une caméra linéaire multipoints et les moyens de traitement sont prévus pour déterminer les différences glissantes entre les valeurs successives correspondant au même point.

La caméra est par exemple une caméra linéaire du type à transfert de charges (CCD selon la terminologie anglo-saxonne).

De préférence, les moyens de détection comprennent en outre des moyens de conversion du rayonnement incident ayant traversé la pièce en lumière visible avant que ce rayonnement ne parvienne à la caméra.

Le rayonnement est par exemple un rayonnement X. Les moyens de conversion, qui précèdent la caméra, peuvent, dans le cas où l'on utilise une source de rayons X, comprendre un écran fluorescent ou un intensificateur d'images.

Enfin, selon un autre mode de réalisation préféré du système objet de l'invention, les moyens de détection comprennent en outre des moyens de renvoi de ladite lumière visible sur la caméra.

On évite ainsi l'irradiation directe de la caméra par le rayonnement.

Par ailleurs, au lieu d'utiliser une caméra linéaire, on peut utiliser une caméra à balayage classique, qui est disposée de façon que ce balayage corresponde à un balayage perpendiculaire aux génératrices des pièces et qui fournit des signaux relatifs à une image à deux dimensions, formée de lignes juxtaposées. Le traitement des signaux comprend alors la mémorisation d'une ligne puis la soustraction de celle-ci, de la ligne suivante.

En outre, au lieu d'utiliser une seule caméra, on peut utiliser deux caméras linéaires juxtaposées et faire simplement la différence des signaux issus de ces caméras pour obtenir le signal de mesure mentionné plus haut.

La présente invention sera mieux comprise à la lecture de la description qui suit, d'un exemple de réalisation donné à titre purement indicatif, en référence aux dessins annexés sur lesquels :

- la figure 1 est une vue schématique d'un mode de réalisation particulier du système objet de l'invention,
- la figure 2A représente deux tranches successives d'un tube contrôlé au moyen de ce système,
- la figure 2B représente les signaux respectifs, fournis par une caméra faisant partie de ce système, pour ces tranches (courbes I et II) ainsi que la différence de ces signaux (courbe III),
- les figures 3A et 3B représentent respectivement un défaut de petite taille et l'image de ce défaut, fournie par le système, et
- les figures 4A et 4B représentent respectivement un défaut de grande taille et l'image de ce défaut, fournie par le système.

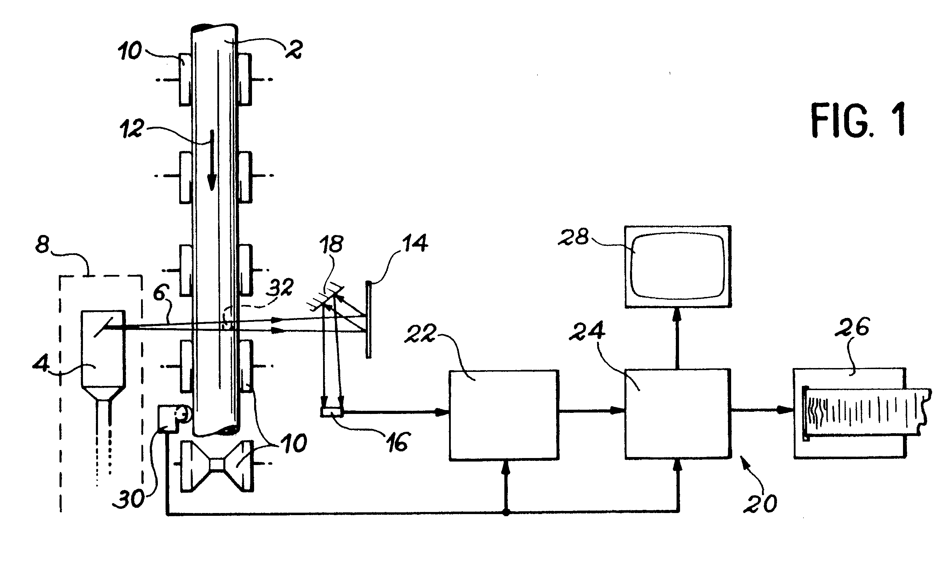

Sur la figure 1, on a représenté schématiquement un mode de réalisation particulier du système objet de l'invention, par exemple destiné à l'examen de tubes 2 qui peuvent être en matière plastique, à la fin de leur chaîne de fabrication par exemple. Ce mode de réalisation particulier comprend une source 4 de rayons X, apte à émettre un faisceau 6 de rayons X et pourvue de moyens de protection 8. Le système comprend également des moyens de déplacement 10 des tubes 2, qui sont aptes à faire défiler ces tubes les uns à la suite des autres devant la source 4, de façon que ces tubes soient traversés par le faisceau 6. Les moyens de déplacement 10 consistent par exemple en un chemin de roulement qui, tout en maintenant les tubes, permet leur déplacement longitudinal suivant une direction et un sens indiqués par la flèche 12 sur la figure 1.

La source 4 étant donc disposée d'un côté du chemin de roulement, le système comprend également un écran fluorescent 14 qui est disposé en regard de la source 4, de l'autre côté du chemin de roulement 10, par exemple parallèlement à la direction 12, de façon que le faisceau 6 tombe sur cet écran après avoir traversé chaque tube 2 qui se présente devant la source 4. Le système comprend en outre une caméra linéaire multipoints 16 de type CCD, qui est prévue pour capter l'image formée sur l'écran 14, sous l'impact du faisceau 6. Afin d'éviter l'irradiation de la caméra 16 par le faisceau 6, l'image est transmise à cette caméra par l'intermédiaire d'un moyen de renvoi 18. Ce moyen de renvoi est par exemple constitué par un miroir plan qui est disposé à 45° de l'écran fluorescent, la caméra étant alors disposée en regard du miroir, perpendiculairement à la direction de déplacement des tubes et à la direction du faisceau 6, de manière à capter les images des tranches successives du tube.

Le système comprend enfin des moyens électroniques de traitement 20 prévus pour traiter les informations recueillies par la caméra 16. Ces moyens électroniques de traitement comprennent eux-mêmes une interface d'acquisition 22 dont une entrée reçoit les signaux fournis par la caméra 16 et dont la sortie est reliée à un calculateur 24 lui-même relié à des moyens de visualisation comprenant une imprimante ou un enregistreur numérique 26 et éventuellement un écran à tube cathodique 28.

La caméra 16 fournit une information quantifiée de l'image formée sur l'écran 14, du fait de la pluralité de points ou éléments dont elle est composée. L'interface 22 a pour fonction de fournir cette information sous forme numérique au calculateur 24 et ce dernier a pour fonction de calculer les différences glissantes entre les valeurs successives correspondant à un même point, pour chacun des points, et lorsque cette différence dépasse une valeur de consigne, elle est prise en compte pour l'analyse du tube 2 considéré.

En d'autres termes, la caméra 16 analyse des tranches ou sections successives du tube 2 qui défile devant la source 4 et pour chaque couple de tranches adjacentes, le calculateur détermine la différence entre la valeur correspondant à un point de la caméra et à la seconde tranche et la valeur correspondant à ce même point et à la première tranche, pour chacun des points de la caméra, et ne retient que les différences dépassant une valeur de consigne qui est fixée en fonction de la taille des défauts que l'on souhaite détecter, ladite valeur de consigne étant d'autant plus faible que l'on souhaite détecter des défauts de faible taille.

L'opération de comparaison à une valeur de consigne n'est qu'optionnelle ; elle est effectuée lorsque l'on désire travailler en tout ou rien.

On précise en outre qu'un codeur de déplacement 30 est également prévu dans le système représenté sur la figure 1. Ce codeur est relié à l'interface 22 ainsi qu'au calculateur 24. Il a pour fonction de permettre au calculateur 24 de repérer la position de la tranche qu'il examine sur un tube déterminé et d'autre part d'indiquer au calculateur le passage d'un tube à un autre, une discontinuité dans les signaux fournis par le codeur se produisant en effet lors de ce passage.

Comme on l'a indiqué plus haut, les informations fournies par le calculateur peuvent être transmises à un enregistreur numérique qui traduit l'image développée du tube contrôlé, ou plus simplement à un imprimante qui fournit une liste des événements (défauts) et leur position sur ce tube.

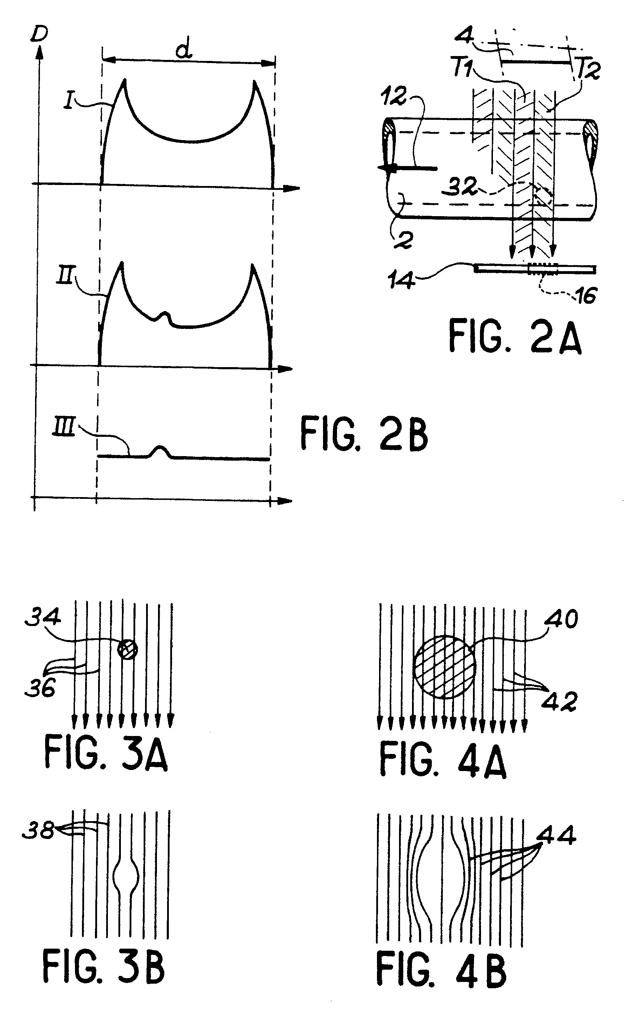

Le principe de la présente invention est également expliqué en référence aux figures 2A et 2B : en admettant qu'un défaut 32 soit présent uniquement dans une tranche T2 du tube 2 et donc pas dans la tranche précédente T1, la courbe I de la figure 2B représente les variations de la densité D du tube 2 pour la tranche T1, en fonction du point considéré sur la caméra (le diamètre du tube étant référencé d sur la figure 2B) tandis que la courbe II de la figure 2B représente les variations de cette densité pour la tranche T2, la courbe III de la figure 2B représentant la différence entre la courbe II et la courbe I. On voit donc que les variations de densité dues à la forme normale de la pièce analysée sont annulées par le calculateur qui fournit ainsi un signal représentatif des seuls défauts présents dans la pièce.

Sur la figure 3A, on a représenté un défaut de petite taille 34 présent dans le tube 2 ainsi que les différentes tranches 36 d'analyse de ce tube et, sur la figure 3B, l'image du défaut 34 fournie par le système (les courbes de différence, homologues de la courbe III, étant référencées 38 sur la figure 3B).

La figure 4A représente quant à elle un défaut de plus grande taille 40 ainsi que les différentes tranches 42 d'analyse du tube, tandis que la figure 4B représente l'image de ce défaut fournie par le système, les courbes de différence étant référencées 44 sur la figure 4B.

On pourrait utiliser une caméra linéaire du type à transfert de charges directement sensible aux rayons X, placée en face du faisceau émis par la source 4, perpendiculairement à ce faisceau et à la direction de déplacement des tubes (donc sans écran ni miroir), mais la définition de l'image serait dans ce cas plus faible (voir figure 2A).

## Revendications

1.  Système de contrôle au défilé, d'une pièce cylindrique (2), par un rayonnement pénétrant, caractérisé en ce qu'il comprend :
    - des moyens (10) de déplacement de la pièce (2) selon sa génératrice,
    - une source (4) dudit rayonnement, prévue pour envoyer ce rayonnement sur la pièce (2), transversalement à celle-ci, lors du passage de cette pièce (2) devant la source (4),
    - des moyens de détection (14, 16, 18) prévus pour détecter le rayonnement ayant traversé la pièce (2) et pour fournir un signal représentatif de chaque tranche de cette pièce (2), qui passe devant la source (4), et
    - des moyens électroniques de traitement (20), prévus pour déterminer la différence entre les signaux correspondant à deux tranches successives (T1,T2), de manière à obtenir un signal de mesure représentatif d'éventuels défauts (32) de la pièce (2).

2.  Système selon la revendication 1, caractérisé en ce que les moyens de détection comprennent une caméra linéaire multipoints (16) et en ce que les moyens de traitement sont prévus pour déterminer les différences glissantes entre les valeurs successives correspondant au même point.

3.  Système selon la revendication 2, caractérisé en ce que la caméra (16) est une caméra linéaire du type à transfert de charges.

4.  Système selon l'une quelconque des revendications 2 et 3, caractérisé en ce que les moyens de détection comprennent en outre des moyens (14) de conversion du rayonnement ayant traversé la pièce en lumière visible avant que ce rayonnement ne parvienne à la caméra (16).

5.  Système selon la revendication 4, caractérisé en ce que les moyens de détection comprennent en outre des moyens (18) de renvoi de cette lumière visible sur la caméra (16).

6.  Système selon l'une quelconque des revendications 1 à 5, caractérisé en ce que le rayonnement est un rayonnement X.

## Claims

1.  System for on-the-move monitoring of a cylindrical part (2), by penetrating radiation, characterised in that it comprises:
    - means (10) for displacing the part (2) along its generatrix,
    - a source (4) of the said radiation, provided in order to send this radiation to the part (2), transversely to the latter, when this part (2) passes in front of the source (4),

- detection means (14, 16, 18) provided in order to detect the radiation having crossed through the part (2) and in order to furnish a signal representing each slice of this part (2), which passes in front of the source (4), and
- electronic processing means (20), provided in order to determine the difference between the signals corresponding to two successive slices ($T_1$, $T_2$) so as to obtain a measurement signal representing possible defects (32) of the part (2).

2. System according to Claim 1, characterised in that the detection means comprise a multipoint linear camera (16) and in that the processing means are provided in order to determine the sliding differences between the successive values corresponding to the same point.

3. System according to Claim 2, characterised in that the camera (16) is a linear camera of the charge-transfer type.

4. System according to either one of Claims 2 and 3, characterised in that the detection means further comprise means (14) for converting the radiation having crossed through the part into visible light before this radiation reaches the camera (16).

5. System according to Claim 4, characterised in that the detection means further comprise means (18) for returning this visible light to the camera (16).

6. System according to any one of Claims 1 to 5, characterised in that the radiation is X-ray radiation.

**Patentansprüche**

1. Überwachungssystem für einen durchlaufenden, zylindrischen Gegenstand (2) unter Verwendung einer eindringenden Strahlung, dadurch gekennzeichnet, daß es umfaßt:
   - Vorrichtungen (10) zum Bewegen des Gegenstands (2) entlang einer Erzeugenden,
   - eine Quelle (4) für die Strahlung, die vorgesehen ist, um diese Strahlung auf den Gegenstand (2) transversal zu diesem bei dem Durchgang des Gegenstandes (2) vor der Quelle (4) zu richten,
   - Detektiervorrichtungen (14, 16, 18), die zur Detektion der Strahlung, die den Gegenstand (2) durchquert hat, und zum Erzeugen eines Signals, das jede Schicht dieses Gegenstands (2), der vor der Quelle (4) durchgeht, darstellt, vorgesehen sind, und
   - elektronische Verarbeitungsvorrichtungen (20), die vorgesehen sind, dem Unterschied zwischen den zwei aufeinanderfolgenden Schichten ($T_1$, $T_2$) entsprechende Signalen derart zu bestimmen, daß man ein Meßsignal erhält, das einen möglichen Fehler (32) des Gegenstands (2) angibt.

2. System nach Anspruch 1, dadurch gekennzeichnet, daß die Detektionsvorrichtungen eine lineare Mehrpunktkamera (16) umfassen und daß die Verarbeitungsvorrichtungen vorgesehen sind, um die gleitenden Differenzen zwischen aufeinanderfolgenden, ein und demselben Punkt entsprechenden Werten zu bestimmen.

3. System nach Anspruch 2, dadurch gekennzeichnet, daß die Kamera (16) eine lineare Kamera des Ladungsübertragungstyps ist.

4. System nach einem der Ansprüche 2 und 3, dadurch gekennzeichnet, daß die Detektionsvorrichtungen außerdem Vorrichtungen (14) zur Umwandlung der Strahlung, die den Gegenstand durchquert hat, in sichtbares Licht umfaßt, bevor diese Strahlung auf die Kamera (16) fällt.

5. System nach Anspruch 4, dadurch gekennzeichnet, daß die Detektionsvorrichtungen außerdem Vorrichtungen (18) umfassen, um dieses sichtbare Licht auf die Kamera (16) zu lenken.

6. System flach einem der Ansprüche 1 bis 5, dadurch gekennzeichnet, daß die Strahlung eine Röntgenstrahlung ist.

FIG. 1

EP 0 216 705 B1

FIG. 2A

FIG. 2B

FIG. 3A

FIG. 4A

FIG. 3B

FIG. 4B